# EUROPEAN PATENT APPLICATION

(11) **EP 4 744 920 A1**
(43) Date of publication of application: **20.05.2026**
(21) Application number: 24858719.8
(22) Date of filing: 30.08.2024
(51) Int. Cl.: B60J 7/00

(54) **SUNROOF CROSS BEAM, SUNROOF ASSEMBLY, AND VEHICLE**

(30) Priority: 01.09.2023 CN 202311121969
(71) Applicant: Fuyao Glass Industry Group Co., Ltd., Fuqing, Fujian 350300 (CN)
(72) Inventor: CHEN, Xiangyi, Fujian 350300 (CN); LIN, Jianjian, Fujian 350300 (CN); DING, Zhengzheng, Fujian 350300 (CN); CHEN, Jie, Fujian 350300 (CN); WANG, Zhixin, Fujian 350300 (CN); LIU, Xianping, Fujian 350300 (CN)
(74) Representative: Patentanwälte Olbricht Buchhold Keulertz
(86) International application number: PCT/CN2024/115775
(87) International publication number: WO 2025/045188

(57) **Abstract**

A sunroof crossbeam, a sunroof assembly and a vehicle are provided. The sunroof crossbeam (100) includes: a crossbeam body having an overall plate-like shape (100), in which a limiting structure for accommodating a drive assembly is integrally formed with the crossbeam body, the limiting structure including: a first limiting portion (111) extending continuously along a preset extending direction; second limiting portions (112) disposed at intervals along the preset extending direction; and third limiting portions (113) disposed at intervals along the preset extending direction; the first limiting portions (111), the second limiting portions (112) and the third limiting portions (113) cooperate to form a drive channel (101) through which the drive assembly extends. The sunroof crossbeam (100) of the present disclosure can simplify the process and structure, reduce the cost, improve the mold strength, facilitate the mounting of drive components, and further enhance the accuracy of inspection.

## Description

### RELATED APPLICATION

The present disclosure claims priority of Chinese Patent Application No.202311121969.X, filed on September 1, 2023, the entire content of which is incorporated herein by reference.

### TECHNICAL FIELD

The present disclosure relates to the technical field of vehicle sunroofs, and particularly to a sunroof crossbeam, a sunroof assembly and a vehicle.

### BACKGROUND

A vehicle sunroof is mounted on a roof of a vehicle to effectively promote air circulation inside the vehicle, increase the inflow of fresh air into the vehicle, and provide vehicle occupants with a healthy and comfortable experience. In addition, the vehicle sunroof can also expand the field of vision and meet the shooting requirements of mobile photography and videography.

The opening function of the sunroof is primarily achieved by a drive chain mounted on a sunroof crossbeam of the vehicle, which causes glass to move under the drive of a motor. In addition, the sunroof is generally provided with a shade, which is opened and closed mainly in the above way. The operation of the drive chain on the sunroof crossbeam of the vehicle can only be realized with a pipe fitting whose diameter matches that of the drive chain. The operation of the drive chain determines that the matching pipe fitting needs to be in a bent state.

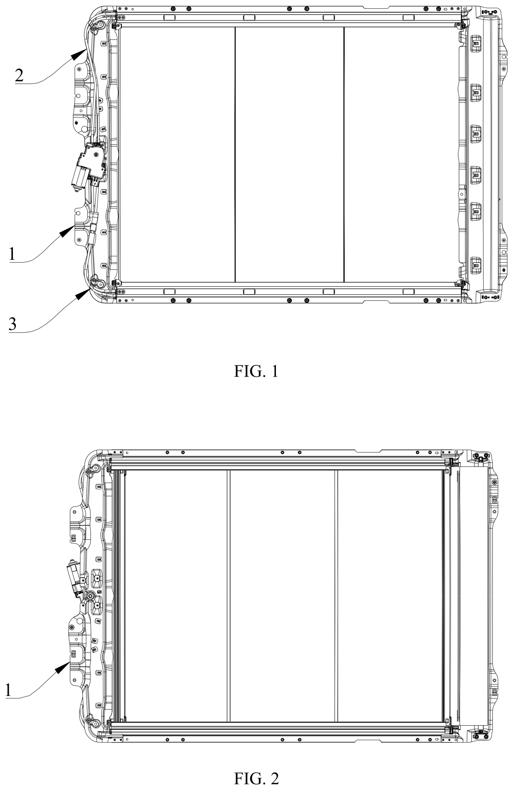

In the prior art, a plurality of metal pipes are usually fixed on a front crossbeam to enable the operation of the drive chain. For example, as illustrated in FIGS. 1 and 2, the metal pipes form a drive channel by being provided with a plurality of drive pipe brackets on the front crossbeam, so as to position the drive chain.

Since providing the plurality of metal pipes necessitates additional assembly parts (e.g., the drive pipe brackets) for positioning the metal pipes, it is difficult to meet the requirements for part count minimization and cost reduction Moreover, due to the need to add the assembly parts such as the drive pipe brackets, the process may become complicated and the cost may further increase.

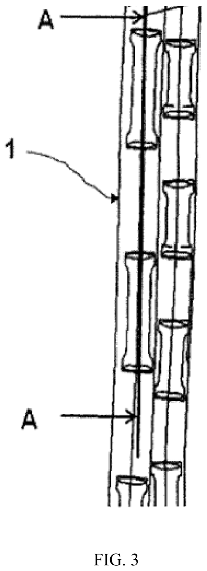

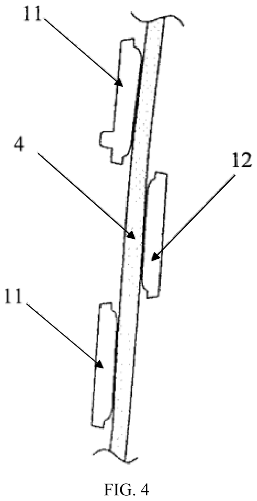

In order to overcome the above problems, a sunroof front crossbeam structure has been proposed in the prior art, wherein a sunroof front crossbeam 1 wholly adopts a vertically-penetrating structure. As illustrated in FIGS. 3 and 4, two drive chain channels composed of a plurality of upper covers 12 and a plurality of lower covers 11 are disposed on the sunroof front crossbeam 1, wherein the upper covers 12 and the lower covers 11 are alternately disposed. The drive chain 4 operates in the drive chain channels formed by the cooperation of the upper covers 12 and the lower covers 11.

After analysis, the inventor finds that the sunroof front crossbeam structure still has the following disadvantages:
the vertically-penetrating structure makes it difficult to ensure sufficient structural strength of a mold, resulting in an overall weak mold structure; when the vertically-penetrating structure is adopted, the drive chain 4 is prone to jamming during mounting, that is, the mounting is not easy; when the vertically-penetrating structure is adopted, the upper covers 12 and the lower covers 11 are alternately disposed, such that the complete size of the circle cannot be detected during inspection, leading to complex inspection and insufficient accuracy.

Therefore, it is necessary to propose a sunroof crossbeam to solve at least one of the above problems.

### Summary

In view of the defects in the prior art, embodiments of the present disclosure provide a sunroof crossbeam, a sunroof assembly and a vehicle, which can simplify the process and structure, reduce the cost, improve the mold strength, facilitate the mounting of drive components, and further enhance the accuracy of inspection.

The specific technical solutions of the embodiments of the present disclosure are as follows:
A sunroof crossbeam, comprising: a crossbeam body having an overall plate-like shape, in which a limiting structure for accommodating a drive assembly is provided by means of integral molding, the limiting structure comprising: a first limiting portion extending continuously along a preset extending direction; second limiting portions disposed at intervals along the preset extending direction; third limiting portions disposed at intervals along the preset extending direction; the first limiting portion, the second limiting portions and the third limiting portions cooperate to form a drive channel through which the drive assembly extends.

In an exemplary embodiment, along the preset extending direction, at least part of the second limiting portion and at least part of the third limiting portion are located on a same cross-section of the drive channel.

In an exemplary embodiment, on a cross-section of the drive channel, the first limiting portion, the second limiting portion, and the third limiting portion are located at three different non-collinear positions, and part of the first limiting portion, part of the second limiting portion, and part of the third limiting portion which cooperate with the drive assembly form a closed detection circle.

In an exemplary embodiment, the beam body has a first side and a second side opposite to each other along a thickness direction, the first limiting portion is located on the first side, and the second limiting portion and the third limiting portion are located on the second side.

In an exemplary embodiment, the beam body has a first surface and a second surface opposite to each other along the thickness direction,

the limiting structure further comprises supporting portions each connecting the first limiting portion to the first surface, and the supporting portions are disposed at intervals along the preset extending direction.

In an exemplary embodiment, along the preset extending direction, the supporting portions are disposed in a staggered manner with the second limiting portions and the third limiting portions.

In an exemplary embodiment, each of the supporting portions has a first mating surface that cooperates with the drive assembly, and the first mating surface is an arc surface.

In an exemplary embodiment, the first limiting portion comprises a supporting bar disposed between adjacent two of the supporting portions.

In an exemplary embodiment, each of the second limiting portions has a second mating surface that cooperates with the drive assembly, and the second mating surface is an arc surface.

In an exemplary embodiment, each of the third limiting portions has a third mating surface that cooperates with the drive assembly, and the third mating surface is an arc surface.

In an exemplary embodiment, on the cross-section of the drive channel, the second limiting portion and the third limiting portion are located on two sides of the drive assembly, respectively, with a predetermined distance between the second limiting portion and the third limiting portion, and the first limiting portion has a predetermined width, wherein the predetermined distance is greater than the predetermined width and smaller than an outer diameter of the drive assembly.

In an exemplary embodiment, the second limiting portion and the corresponding third limiting portion are a pair of claws disposed on the second surface.

A sunroof assembly, comprising any of the aforementioned sunroof crossbeams.

In an exemplary embodiment, the sunroof assembly further comprises: a drive assembly configured to extend through the drive channel; and a drive unit configured to drive the drive assembly to operate.

In an exemplary embodiment, the sunroof assembly further comprises a pull and a shade, in which the pull is connected to the drive assembly and is capable of being driven by the drive assembly to open and close the shade.

In an exemplary embodiment, the drive assembly comprises a drive conduit and a drive cable, the drive conduit is configured to extend through the drive channel, the drive cable is configured to extend through the drive conduit, and one end of the drive cable is connected to the pull.

A vehicle, comprising any of the aforementioned sunroof assemblies.

The technical solutions of the present disclosure achieve the following significant advantageous effects.

In the embodiments of the specification of the present disclosure, since the sunroof crossbeam forms the drive channel through the limiting structure including the first limiting portion, the second limiting portions, and the third limiting portions, and the limiting structure is integrally formed with the beam body, compared with the prior art, it is unnecessary to adopt any additional metal channel or drive pipe bracket, thereby reducing the cost and simplifying the structure and process.

In addition, in the limiting structure of the sunroof crossbeam of the present disclosure, the first limiting portion is disposed to extend continuously along the preset extending direction, so that the mold strength can be improved during the injection molding of the product, and when being mounted, the drive assembly can move along the first limiting portion, thereby achieving convenient mounting and less likelihood of vertical deviation.

With reference to the following descriptions and drawings, specific embodiments of the present disclosure are disclosed in detail, and the ways in which the principles of the present disclosure can be adopted are indicated. It shall be understood that the scope of the embodiments of the present disclosure is not thereby limited. Within the spirit and provisions of the appended claims, the embodiments of the present disclosure include many changes, modifications, and equivalents. Features described and/or illustrated for one embodiment may be used in the same or similar manner in one or more other embodiments, combined with features in other embodiments, or substituted for features in other embodiments.

### Brief Description of the Drawings

The drawings described here are for illustrative purposes only and are not intended to limit the scope of the present disclosure in any way. In addition, the shapes, scales, etc. of various component in the drawings are merely schematic to facilitate the understanding of the present disclosure, rather than limiting the shapes and scales of the components. Being taught by the present disclosure, those skilled in the art can select various possible shapes and scales to implement the present disclosure according to specific circumstances.
FIG. 1 illustrates a front view of a sunroof assembly in the prior art;
FIG. 2 illustrates a rear view of a sunroof assembly in the prior art;
FIG. 3 illustrates a partial structural diagram of a sunroof front crossbeam in the prior art;
FIG. 4 illustrates a cross-sectional view taken along line A-A in FIG. 3;
FIG. 5 illustrates a front view of a sunroof crossbeam according to an embodiment of the present disclosure;
FIG. 6 illustrates a rear view of a sunroof crossbeam according to an embodiment of the present disclosure;
FIG. 7 illustrates a partially enlarged view of FIG. 5;
FIG. 8 illustrates a cross-sectional view taken along line B-B in FIG. 7;
FIG. 9 illustrates a schematic diagram of FIG. 8 with a drive assembly removed;
FIG. 10 illustrates a cross-sectional view taken along line C-C in FIG. 7;
FIG. 11 illustrates a cross-sectional view of a vertically-penetrating structure in the prior art;
FIG. 12 illustrates a front view of a sunroof assembly according to an embodiment of the present disclosure;
FIG. 13 illustrates a rear view of a sunroof assembly according to an embodiment of the present disclosure;
FIG. 14 illustrates a cross-sectional view of a mold for a vertically-penetrating structure in the prior art; and
FIG. 15 illustrates a cross-sectional view of a mold at a limiting structure according to an embodiment of the present disclosure.

### Detailed Description of the Embodiments

The technical solutions of the present disclosure may be described below in detail with reference to the drawings and the specific embodiments. It shall be understood that these embodiments are only used to illustrate the present disclosure rather than limiting the scope thereof. After reading the present disclosure, various equivalent modifications of the present disclosure made by those skilled in the art shall fall within the scope defined by the appended claims of the present disclosure.

To be noted, when an element is referred to as being "disposed on" another element, it may be directly on the other element or an intervening element may also be present. When an element is considered to be "connected to" another element, it may be directly connected to the other element or an intervening element may also be present. The terms "vertical", "horizontal", "upper", "lower", "left", "right" and similar expressions used in the present disclosure are for illustrative purposes only and do not represent a unique embodiment.

Unless otherwise defined, all technical and scientific terms used in the present disclosure have the same meanings as commonly understood by those skilled in the art to which the present disclosure pertains. The terms used in the specification of the present disclosure are only for the purpose of describing the specific embodiments and are not intended to limit the present disclosure. The term "and/or" used in the present disclosure includes any and all combinations of one or more associated items which are listed.

The present disclosure provides a sunroof crossbeam, a sunroof assembly and a vehicle, which can simplify the process and structure, reduce the cost, improve the mold strength, facilitate the mounting of drive components, and further enhance the accuracy of inspection.

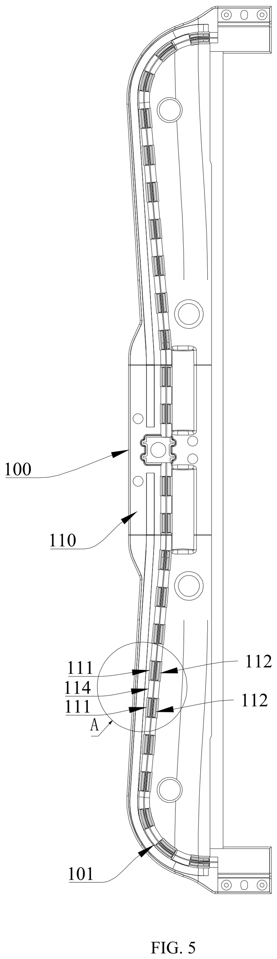

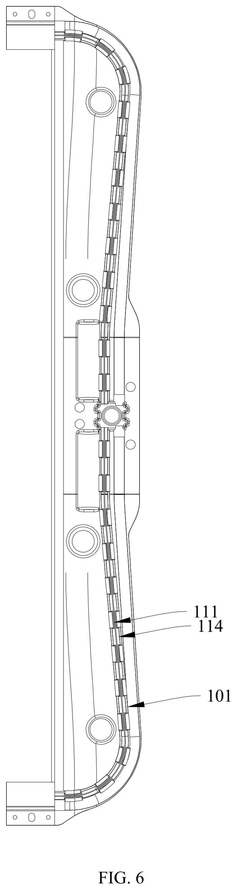

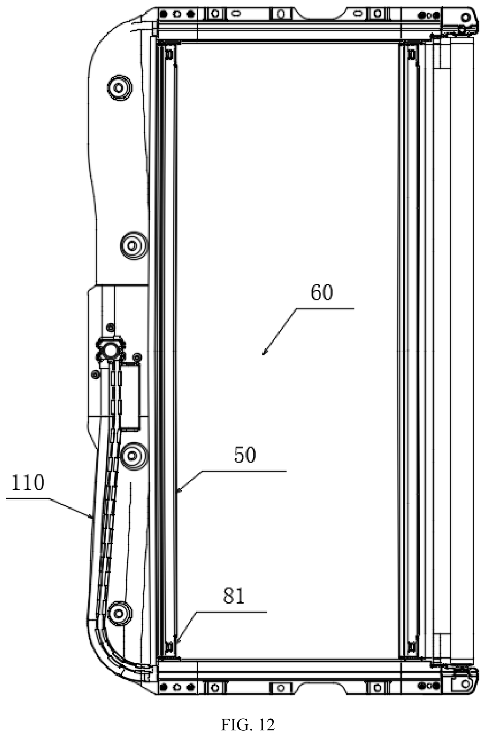

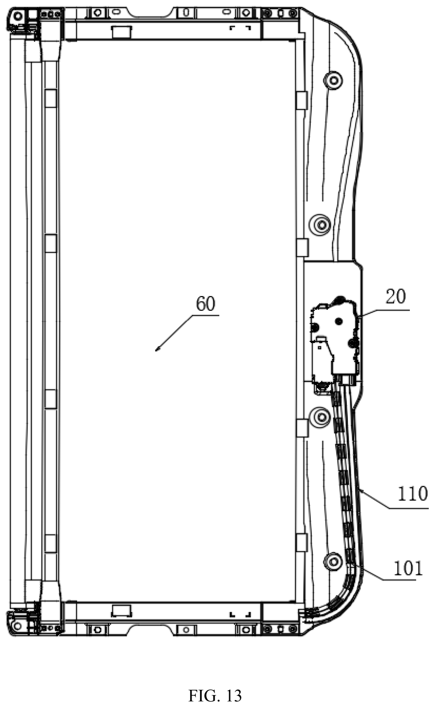

Referring to FIGS. 5, 6, 7, 12 and 13 comprehensively, an embodiment of the specification of the present disclosure provides a sunroof crossbeam 100, which may include a crossbeam body having an overall plate-like shape 110, in which a limiting structure for accommodating a drive assembly is integrally formed with the crossbeam body, the limiting structure includes: a first limiting portion 111 extending continuously along a preset extending direction, second limiting portions 112 disposed at intervals along the preset extending direction, and third limiting portions 113 disposed at intervals along the preset extending direction, in which the first limiting portion 111, the second limiting portions 112 and the third limiting portions 113 cooperate to form a drive channel 101 through which the drive assembly extends.

An embodiment of the specification of the present disclosure provides a sunroof crossbeam 100, which includes a plate-shaped beam body 110, and a limiting structure is integrally formed at a predetermined position in the beam body 110 (e.g., a position close to an edge of the beam body 110) to accommodate the drive assembly. Specifically, the beam body 110 and the limiting structure may be integrally formed, for example, by injection molding of plastic particles. Of course, other modes may be adopted for the integral forming method, which are not limited to the above description. Being taught by the technical essence of the present disclosure, those skilled in the art may also make other modifications, which shall fall within the protection scope of the present disclosure as long as the achieved functions and effects are the same as or similar to those of the present disclosure.

The drive assembly is specifically configured to connect to a drive unit 20 and can operate after being driven by the drive unit 20. For example, in the embodiments and the drawings of the present disclosure, the drive assembly is primarily explained and illustrated by taking a drive cable 82 and a drive conduit 81 sleeved outside as an example. Other forms of the drive assembly, such as a flexible drive chain, may be adaptively used for replacement with reference to the present disclosure.

The limiting structure forms the drive channel 101 that restricts the drive assembly. The limiting structure may include: a first limiting portion 111, a second limiting portion 112, and a third limiting portion 113, wherein the first limiting portion 111, the second limiting portion 112, and the third limiting portion 113 cooperate to form the drive channel 101 through which the drive assembly extends.

In the embodiment of the specification of the present disclosure, since the limiting structure including the first limiting portion 111, the second limiting portion 112, and the third limiting portion 113 forms the drive channel 101, and the limiting structure is integrally formed with the beam body 110, compared with the prior art, it is unnecessary to adopt any additional metal channel or drive pipe bracket, thereby reducing the cost and simplifying the structure and process.

In addition, in the limiting structure of the present disclosure, the first limiting portion 111 is disposed to extend continuously along the preset extending direction, so that the mold strength can be improved during the injection molding of the product, and when being mounted, the drive assembly can move along the first limiting portion 111, thereby achieving convenient mounting and less likelihood of vertical deviation.

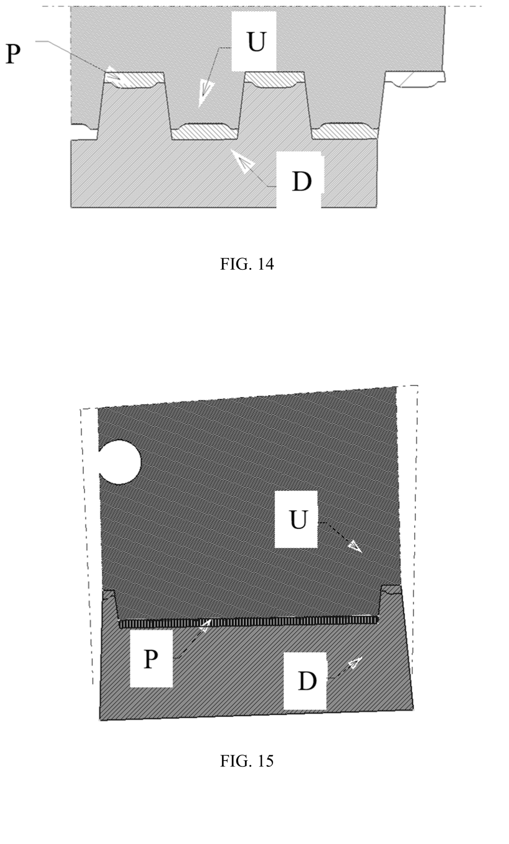

Referring to FIGS. 14 and 15, compared with the vertically-penetrating structure adopted in the prior art, since the first limiting portion 111 is disposed to extend continuously along a preset extending direction, the mold strength of the sunroof crossbeam of the present disclosure is also higher than that of the existing vertically-penetrating structure during manufacturing.

As illustrated in FIG. 14, in the vertically-penetrating structure, the upper cover and the lower cover are relatively separate, and there is no connection between two adjacent products P (i.e., the upper cover and the lower cover). In a partial cross-sectional view along the extending direction of the drive channel 101, the upper and lower molds are opened to form spaced bosses one by one, and the strength of the protruding position of each boss is relatively weak.

In the present disclosure, however, the bosses are connected to each other, and the connecting structures between the bosses form an integral whole. During the specific injection molding, when the upper mold U and the lower mold D undergo processes such as mold stripping, the bosses have a high strength and are not easy to be damaged.

In which, the preset extending direction in the embodiment of the present disclosure may specifically be an extending direction of the limiting structure (the drive channel 101), i.e., an arrangement direction of the drive assembly. The preset extending direction may be generally determined according to the local outer contour structure of the beam body 110. Of course, the preset extending direction may be adaptively adjusted according to the configuration of the beam body 110, the limiting structure, and the arrangement of other parts on the beam body 110, which is not specifically limited here in the present disclosure.

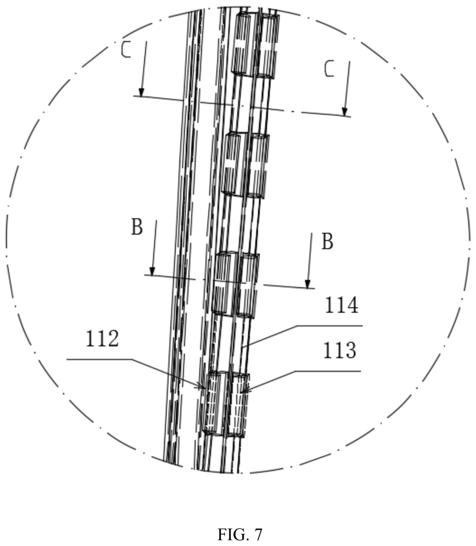

Referring to FIGS. 7, 8 and 9, in an embodiment, along the preset extending direction, i.e., the extending direction of the drive channel 101, at least part of the second limiting portion 112 and at least part of the third limiting portion 113 can be located on a same cross-section of the drive channel 101.

In this embodiment, along the preset extending direction, both the second limiting portions 112 and the third limiting portions 113 are arranged at intervals. In which, along the preset extending direction, taking a certain spacing interval as an example, at least part of the second limiting portion 112 and at least part of the third limiting portion 113 can be located on a same cross-section of the drive channel 101. That is, when a cross-section is taken on the drive channel 101, one of the second limiting portions 112, one of the third limiting portions 113 and the first limiting portion 111 disposed to extend continuously can be intercepted simultaneously, so as to reliably limit the drive assembly using the drive channel formed by the first limiting portion 111, the second limiting portion 112 and the third limiting portion 113.

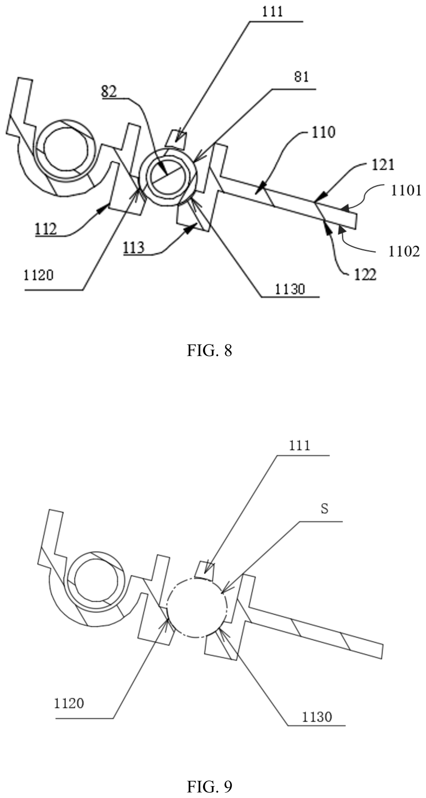

As illustrated in FIGS. 8 and 9, further, on the cross-section of the drive channel 101, the first limiting portion 111, the second limiting portion 112, and the third limiting portion 113 are located at three different non-collinear positions, and three parts of the first limiting portion 111, the second limiting portion 112, and the third limiting portion 113 which cooperate with the drive assembly can form a closed detection circle S.

As illustrated in FIGS. 8 and 9, in this embodiment, on the cross-section of the drive channel 101, the first limiting portion 111, the second limiting portion 112, and the third limiting portion 113 are located at three different non-collinear positions, and three parts of the first limiting portion 111, the second limiting portion 112, and the third limiting portion 113 which cooperate with the drive assembly can form a closed detection circle S. Subsequently, by measuring the positions of the three limiting portions, a fitting size (i.e., an outer diameter of the drive assembly) of the product here can be accurately measured.

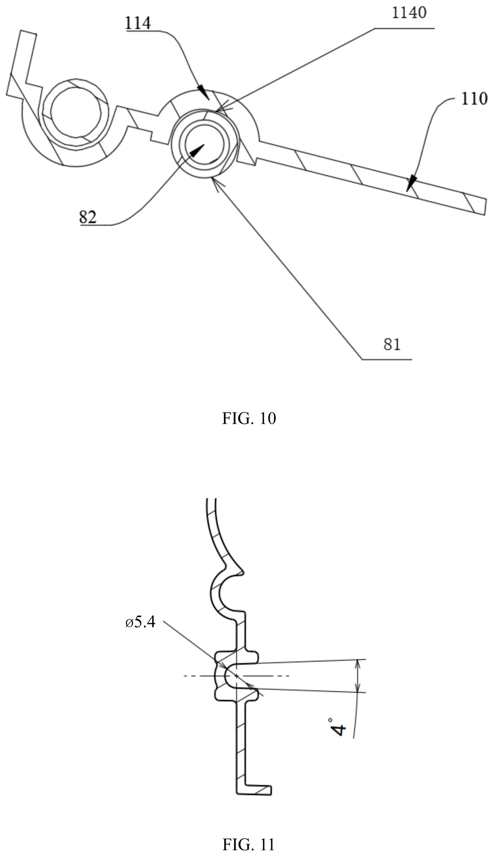

As illustrated in FIG. 11, compared with the existing vertically-penetrating structure, the upper/lower cover of this structure is semicircular. During specific inspection, only the approximate size (φ5.4) of the semicircle can be detected, and the complete size of the entire circle cannot be measured. Subsequently, when using the size of the semicircle to determine the fitting size of the product P here, the accuracy is relatively low.

As illustrated in FIG. 8, the beam body 110 has a first side 121 and a second side 122 opposite to each other along a thickness direction, the first limiting portion 111 is located on the first side 121, and the second limiting portion 112 and the third limiting portion 113 are located on the second side 122.

The first limiting portion 111 is located on a different side from the second limiting portion 112 and the third limiting portion 113. Based on the mounting position of the sunroof crossbeam, the first side 121 where the first limiting portion 111 is located is a relatively lower side, and the second side 122 is a relatively upper side.

In this embodiment, the second limiting portion 112 and the third limiting portion 113 are located on the same side of the beam body 110, and specifically may be claw structures disposed in a pair. Of course, the specific forms of the second limiting portion 112 and the third limiting portion 113 are not limited to the above examples. In the embodiments and the drawings of the present disclosure, the form of claws is mainly adopted for illustration.

The second limiting portion 112 and the third limiting portion 113 are located on one side of the beam body 110, and the first limiting portion 111 is located on the other side of the beam body 110. In which, the through first limiting portion 111 located on the bottom side reliably supports the assembling and movement of the drive assembly, and the second limiting portion 112 and the third limiting portion 113 reliably limit the drive assembly. The drive channel 101 formed by the cooperation of the three limiting portions not only achieves a simple structure, but also reduces the cost and improves the mold strength.

As illustrated in FIG. 10, specifically, the beam body 110 has a first surface 1101 and a second surface 1102 opposite to each other along the thickness direction, the limiting structure further includes supporting portions 114 each connecting the first limiting portion 111 to the first surface 1101, and the supporting portions 114 are disposed at intervals along the preset extending direction. It shall be understood that the first surface 1101 is a surface of the first side 121 of the beam body 110, and the second surface 1102 is a surface of the second side 122 of the beam body 110.

In this embodiment, the limiting structure further includes supporting portions 114 each connecting the first limiting portion 111 to the first surface 1101. In addition to connecting the first limiting portion 111 to the first surface 1101, the supporting portion 114 may also support the drive assembly.

The supporting portions 114 are disposed at intervals along the preset extending direction (i.e., the extending direction of the drive channel 101). Specifically, along the preset extending direction, the supporting portions 114 are disposed in a staggered manner with the second limiting portions 112 and the third limiting portions 113.

Specifically, along the preset extending direction, the supporting portions 114, the second limiting portions 112, and the third limiting portions 113 may be disposed at intervals in sequence. During manufacturing, the supporting portions 114, the first limiting portion 111, the second limiting portions 112, and the third limiting portions 113 may be formed by paired injection molding using the upper molds U and the lower molds D which have a predetermined configuration.

In which, since the drive channel 101 cooperates with the drive assembly, and the cross-sectional shape of the drive assembly is usually circular, in order to better match the drive assembly, the supporting portion 114 has a first mating surface 1140 that cooperates with the drive assembly, and the first mating surface 1140 is an arc surface. In addition, when the surface that cooperates with the drive assembly is an arc surface, it also facilitates the smooth operation of the drive assembly within the limiting structure.

Further, the first limiting portion 111 may include a supporting bar disposed between adjacent two of the supporting portions 114. Along the extending direction of the drive channel 101, at a position where the supporting portion 114 is not disposed, the first limiting portion 111 may be a partial structure of the supporting portion 114. That is, at the position where the supporting portion 114 is not disposed, the supporting bar included in the first limiting portion 111 may function as a part of the supporting portion 114, which, together with another part for matching the drive assembly, constitutes the supporting portion 114.

A length of the supporting bar in the predetermined extending direction may be the same as that of either the second limiting portions 112 or the third limiting portions 113 in the predetermined extending direction. In cross-section taken through the drive channel 101, the support bar may have a substantially trapezoidal shape, which is primarily configured to meet the needs of mold opening during the injection molding process. A surface of the supporting bar facing the drive assembly may also be an arc surface, a curvature of which is consistent with that of the arc surface of the supporting portion 114.

As illustrated in FIG. 8, in an embodiment, the second limiting portion 112 has a second mating surface 1120 that cooperates with the drive assembly, and the second mating surface 1120 is an arc surface. The third limiting portion 113 has a third mating surface 1130 that cooperates with the drive assembly, and the third mating surface 1130 is an arc surface.

Since the drive channel 101 cooperates with the drive assembly, and the cross-sectional shape of the drive assembly is usually circular, in order to better match the drive assembly, the surfaces of the second limiting portion 112 and the third limiting portion 113 facing the drive assembly may be arc surfaces. The second limiting portion 112, the third limiting portion 113, and the first limiting portion 111 cooperate to form a close-fitting or small-clearance fit relationship with the drive assembly. In which, the second limiting portion 112 and the third limiting portion 113 may adopt any configuration at a position not cooperating with the drive assembly, as long as being implementable by the current injection molding process in principle.

On the cross-section of the drive channel 101, the second limiting portion 112 and the third limiting portion 113 are located on two sides of the drive assembly, respectively, with a predetermined distance between the second limiting portion 112 and the third limiting portion 113, and the first limiting portion 111 has a predetermined width, in which the predetermined distance is greater than the predetermined width and smaller than an outer diameter of the drive assembly.

After the drive assembly is disposed in the drive channel 101, it is necessary to ensure that the drive assembly can be reliably confined within the drive channel 101. To achieve this purpose, the distance between the second limiting portion 112 and the third limiting portion 113 may be set smaller than the outer diameter of the drive assembly. In addition, considering the reasonable setting of the mold during injection molding to ensure smooth mold release, the width of the first limiting portion 111 is smaller than the distance between the second limiting portion 112 and the third limiting portion 113.

In a specific embodiment, the second limiting portion 112 and the third limiting portion 113 are a pair of claws disposed on the second surface 1102. The second limiting portion 112 and the third limiting portion 113 may form a symmetrical structure. Taking one of the claws as an example, it may have the configuration illustrated in the figure. On a B-B cross-section of the drive channel 101, there included: an arc surface facing the drive assembly, and two mutually perpendicular planes opposite to the arc surface, etc. Of course, the two mutually perpendicular planes may also be replaced by a single arc surface. Overall, on the premise that the basic configurations of the second limiting portion 112 and the third limiting portion 113 meet the requirements of injection molding, it only needs to ensure the sufficient strength and the ability to limit the drive assembly. The specific shapes, configurations, and sizes are not specially required in the present disclosure, and being taught by the technical essence of the present disclosure, those skilled in the art may also make other modifications, which shall fall within the protection scope of the present disclosure as long as the achieved functions and effects are the same as or similar to those of the present disclosure.

The embodiments of the present disclosure further provide a sunroof assembly, which includes the aforementioned sunroof crossbeam 100. By being provided with the sunroof crossbeam 100, the sunroof assembly can achieve the technical effects achieved by the embodiments of the sunroof crossbeam 100. For details, please refer to the specific description of the aforementioned embodiments, which may not be repeated herein.

In an embodiment, the sunroof assembly may further include: a drive assembly configured to extend through the drive channel 101; and a drive unit 20 configured to drive the drive assembly to operate. In addition, the sunroof assembly may further include: a pull 50 and a shade 60, wherein the pull 50 is connected to the drive assembly, and can be driven by the drive assembly to open and close the shade 60.

Specifically, the drive unit 20 mainly provides a driving force for opening and closing the shade 60. Specifically, the drive unit 20 may be a motor, etc. In the specification of the present disclosure, the drive unit 20 is illustrated by taking a drive motor as an example.

In which, the drive assembly mainly transmits the driving force provided by the drive unit 20 to the shade 60. The drive assembly may include a drive conduit 81 and a drive cable 82, the drive conduit 81 is configured to extend through the drive channel 101, the drive cable 82 is configured to extend through the drive conduit 81, and one end of the drive cable 82 is connected to the pull 50. In which, the drive cable 82 operates inside the drive conduit 81, the drive conduit 81 is mounted in the drive channel 101, and the drive channel 101 restricts the drive conduit 81 from shaking.

In use, the drive motor drives the drive cable 82 to operate, and the drive cable 82 drives the pull 50 of the shade 60 to move, thereby opening and closing the shade 60.

The embodiments of the present disclosure further provide a vehicle, including the sunroof assembly which is provided with the sunroof crossbeam 100. By being equipped with the sunroof assembly which is provided with the sunroof crossbeam 100, the vehicle can achieve the technical effects realized by the embodiments of the sunroof crossbeam 100. For details, please refer to the specific description of the aforementioned embodiments, which will not be repeated herein.

It shall be noted that in the description of the present disclosure, the terms "first", "second", etc. are only used for descriptive purposes and to distinguish similar objects, and there is no sequential order therebetween, nor shall they be construed as indicating or implying relative importance. In addition, in the description of the present disclosure, unless otherwise specified, the meaning of "a plurality of' refers to two or more.

The embodiments in the specification are all described in a progressive manner, and the same or similar portions of the embodiments can refer to each other. Each embodiment lays an emphasis on its distinctions from other embodiments.

Those described above are only a few embodiments of the present disclosure. Although the embodiments disclosed in the present disclosure are as described above, the content is only the embodiments adopted to facilitate the understanding of the present disclosure and is not intended to limit the present disclosure. Any person skilled in the art to which the present disclosure pertains can make any modifications and changes in the form and details of the embodiments without departing from the spirit and the scope revealed in the present disclosure. However, the patent protection scope of the present disclosure shall still be subject to the scope defined by the appended claims.

## Claims

1. A sunroof crossbeam, comprising: a crossbeam body having an overall plate-like shape, wherein a limiting structure for accommodating a drive assembly is integrally formed with the crossbeam body, the limiting structure comprising:
a first limiting portion extending continuously along a preset extending direction;
second limiting portions disposed at intervals along the preset extending direction;
third limiting portions disposed at intervals along the preset extending direction;
the first limiting portion, the second limiting portions and the third limiting portions cooperate to form a drive channel through which the drive assembly extends.

2. The sunroof crossbeam according to claim 1, wherein along the preset extending direction, at least part of the second limiting portion and at least part of the third limiting portion are located on a same cross-section of the drive channel.

3. The sunroof crossbeam according to claim 2, wherein on a cross-section of the drive channel, the first limiting portion, the second limiting portion, and the third limiting portion are located at three different non-collinear positions, and part of the first limiting portion, part of the second limiting portion, and part of the third limiting portion which cooperate with the drive assembly form a closed detection circle.

4. The sunroof crossbeam according to any one of claims 1 to 3, wherein the beam body has a first side and a second side opposite to each other along a thickness direction, the first limiting portion is located on the first side, and the second limiting portion and the third limiting portion are located on the second side.

5. The sunroof crossbeam according to claim 4, wherein the beam body has a first surface and a second surface opposite to each other along the thickness direction,
the limiting structure further comprises supporting portions each connecting the first limiting portion to the first surface, and the supporting portions are disposed at intervals along the preset extending direction.

6. The sunroof crossbeam according to claim 5, wherein along the preset extending direction, the supporting portions are disposed in a staggered manner with the second limiting portions and the third limiting portions.

7. The sunroof crossbeam according to claim 6, wherein each of the supporting portions has a first mating surface that cooperates with the drive assembly, and the first mating surface is an arc surface.

8. The sunroof crossbeam according to claim 7, wherein the first limiting portion comprises a supporting bar disposed between adjacent two of the supporting portions.

9. The sunroof crossbeam according to claim 4, wherein each of the second limiting portions has a second mating surface that cooperates with the drive assembly, and the second mating surface is an arc surface.

10. The sunroof crossbeam according to claim 4, wherein each of the third limiting portions has a third mating surface that cooperates with the drive assembly, and the third mating surface is an arc surface.

11. The sunroof crossbeam according to claim 5, wherein on the cross-section of the drive channel, the second limiting portion and the third limiting portion are located on two sides of the drive assembly, respectively, with a predetermined distance between the second limiting portion and the third limiting portion, and the first limiting portion has a predetermined width, wherein the predetermined distance is greater than the predetermined width and smaller than an outer diameter of the drive assembly.

12. The sunroof crossbeam according to claim 11, wherein the second limiting portion and the corresponding third limiting portion are a pair of claws disposed on the second surface.

13. A sunroof assembly, comprising the sunroof crossbeam according to any one of claims 1 to 12.

14. The sunroof assembly according to claim 13, further comprising:
a drive assembly configured to extend through the drive channel; and
a drive unit configured to drive the drive assembly to operate.

15. The sunroof assembly according to claim 14, further comprising a pull and a shade, wherein the pull is connected to the drive assembly and is capable of being driven by the drive assembly to open and close the shade.

16. The sunroof assembly according to claim 15, wherein the drive assembly comprises a drive conduit and a drive cable, the drive conduit is configured to extend through the drive channel, the drive cable is configured to extend through the drive conduit, and one end of the drive cable is connected to the pull.

17. A vehicle, comprising the sunroof assembly according to any one of claims 13 to 16.
